(19) **Europäisches Patentamt European Patent Office Office européen des brevets**

(11) **EP 3 836 251 B1**

(12) **EUROPEAN PATENT SPECIFICATION**

(45) Date of publication and mention
of the grant of the patent:
**07.01.2026 Bulletin 2026/02**

(21) Application number: **19865755.3**

(22) Date of filing: **24.09.2019**

(51) International Patent Classification (IPC):
*H01M 50/443* (2021.01)       *H01M 50/491* (2021.01)
*H01M 50/417* (2021.01)       *H01M 10/12* (2006.01)

(52) Cooperative Patent Classification (CPC):
**H01M 50/417; H01M 50/443; H01M 50/491;**
H01M 10/12; Y02E 60/10; Y02P 70/50

(86) International application number:
**PCT/JP2019/037310**

(87) International publication number:
**WO 2020/067032 (02.04.2020 Gazette 2020/14)**

(54) **SEPARATOR FOR LEAD ACID BATTERY**

SEPARATOR FÜR BLEIBATTERIE

SÉPARATEUR POUR BATTERIE AU PLOMB-ACIDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.09.2018 JP 2018180164**

(43) Date of publication of application:
**16.06.2021 Bulletin 2021/24**

(73) Proprietor: **GS Yuasa International Ltd.
Kyoto-shi, Kyoto 601-8520 (JP)**

(72) Inventors:
• **ITO, Etsuko
  Kosai-shi, Shizuoka 431-0452 (JP)**
• **ANDO, Kazunari
  Kosai-shi, Shizuoka 431-0452 (JP)**

(74) Representative: **Isarpatent
Patent- und Rechtsanwälte Barth
Charles Hassa Peckmann & Partner mbB
Friedrichstrasse 31
80801 München (DE)**

(56) References cited:
EP-A1- 1 585 182        WO-A1-2014/128803
WO-A1-2016/059739       JP-A- 2017 045 539
JP-A- H11 322 988

• **TOQUET FABIEN: "Study of the combined roles
of the Silica/Oil/UHMWPE formulation and
process parameters on morphological and
electrical properties of battery Separators", 17
February 2017 (2017-02-17), pages 1 - 125,
XP055902298, Retrieved from the Internet
<URL:https://tel.archives-ouvertes.fr/
tel-01526682/document> [retrieved on 20220317]**
• **JAMES B DOE ET AL: "Separators and their
Effect on Lead-Acid Battery Performance",
TELECOMMUNICATIONS ENERGY
CONFERENCE, 1986. INTELEC '86.
INTERNATIONAL, IEEE, PISCATAWAY, NJ, USA,
19 October 1986 (1986-10-19), pages 67 - 71,
XP031432756, ISBN: 978-0-9692316-1-5**
• **WEIGHALL ET AL: "Battery separator design
requirements and technology improvements for
the modern lead/acid battery", JOURNAL OF
POWER SOURCES, ELSEVIER, AMSTERDAM,
NL, vol. 53, no. 2, 1 February 1995 (1995-02-01),
pages 273 - 282, XP025946601, ISSN: 0378-7753,
[retrieved on 19950201], DOI: 10.1016/
0378-7753(94)02008-Q**

**(Cont. next page)**

- TONIAZZO ET AL: "The key to success: Gelled-electrolyte and optimized separators for stationary lead-acid batteries", JOURNAL OF POWER SOURCES, ELSEVIER, AMSTERDAM, NL, vol. 158, no. 2, 25 August 2006 (2006-08-25), pages 1124 - 1132, XP005633289, ISSN: 0378-7753, DOI: 10.1016/ J.JPOWSOUR.2006.02.106

## Description

TECHNICAL FIELD

The present invention relates to a separator for lead-acid battery and a lead-acid battery.

BACKGROUND ART

A lead-acid battery is used in various applications in addition to in-vehicle and industrial applications. The lead-acid battery includes a positive electrode plate, a negative electrode plate, a separator interposed therebetween, and an electrolyte solution. In the lead-acid battery, the concentration of sulfuric acid in the electrolyte solution is significantly reduced during discharge depending on charge/discharge conditions and applications, so that a penetration short circuit (also referred to as dendrite short circuit) is apt to occur, in which a large amount of dissolved lead ions precipitate on the negative electrode plate during charge, and penetrates into the separator. Therefore, techniques for suppressing the permeation short circuit have been studied.

For example, Patent Document 1 proposes a separator for flooded-type lead-acid battery. The separator includes a rib-attached microporous film obtained by melt-mixing a raw material composition mainly composed of a polyolefin resin, an inorganic powder, and a plasticizer, and then removing a part of the plasticizer. The separator satisfies all of the following conditions: when a portion that does not perpendicularly bite the film surface at a boundary line between a flat sheet and a plate contacting main rib (the base line of the rib) in the rib-attached microporous film is taken as a base part,

(1) the void ratio of the base part is 55 to 75%, and the void ratio of the rib part is 0.8 times or less of that of the base part;
(2) the average pore diameter of the base part is 0.02 to 0.2 $\mu$m, and the average pore diameter of the rib part is 0.8 times or less of that of the base part; and
(3) the maximum pore diameter of the base part is 0.3 to 0.8 $\mu$m, and

the maximum pore diameter of the rib part is 0.8 times or less of that of the base part.

Patent Document 2 proposes a lead-acid battery including an element in which a positive electrode plate and a negative electrode plate are laminated with a separator interposed therebetween, an electrolyte solution, and a container in which the element is housed. A length A between outer ends of both end ears directly below a negative electrode strap connecting ears of the negative electrode plate, and

a length A' between outer ends of both end ears directly below a negative electrode strap connecting ears of the positive electrode plate are smaller than lengths B and B' between outer ends of upper frame bone parts in the laminating direction in the plates located at both ends, of the plates connected to the straps. The separator includes ribs in a region facing the upper part of the positive electrode plate and a region facing the upper part of the negative electrode plate.

Patent Document 3 proposes a lead-acid battery including a positive electrode plate, a negative electrode plate, and a separator interposed between the positive electrode plate and the negative electrode plate. The separator includes a base part, a negative electrode rib provided on a negative electrode surface of the base part facing the negative electrode plate, and side end parts disposed on both sides of the base part. The side end part includes, at least in a part, a thick part thicker than the base part in part. Both ends of the negative electrode plate are located within the width of the thick part when viewed from the thickness direction of the negative electrode plate.

PRIOR ART DOCUMENTS

PATENT DOCUMENTS

Patent Document 1: JP-A-2013-211115
Patent Document 2: JP-A-2017-63001
Patent Document 3: JP-A-2017-33660

NON-PATENT DOCUMENTS

The following documents discuss the influence of the tortuosity parameter on the properties of separators for lead-acid batteries:

Non-patent Document 1: Toquet Fabien: "Study of the combined roles of the Silica/Oil/UHMWPE formulation and process parameters on morphological and electrical properties of battery Separators", 17 February 2017.
Non-patent Document 2:
James B. Doe et al.: "Separators and their Effect on Lead-Acid Battery Performance", TELECOMMUNICATIONS ENERGY CONFERENCE, 1986, INTELEC '86 INTERNATIONAL, IEEE, Piscataway, NJ, USA, 19 October 1986.

DISCLOSURE OF THE INVENTION

PROBLEMS TO BE SOLVED BY THE INVENTION

Conventionally, techniques such as Patent Documents 1 to 3 have been studied from the viewpoint of suppressing a penetration short circuit. However, even if such techniques are used, the penetration short circuit cannot be sufficiently suppressed by the pore structure of the separator.

MEANS FOR SOLVING THE PROBLEMS

One aspect of the present invention relates to a separator for lead-acid battery containing a polyolefin, wherein the separator has a pore tortuosity of 5 or more.

ADVANTAGES OF THE INVENTION

In a lead-acid battery, the occurrence of a penetration short circuit can be suppressed.

BRIEF DESCRIPTION OF THE DRAWINGS

Fig. 1 is a schematic plan view of the external appearance of a bag-shaped separator according to an embodiment of the present invention.
Fig. 2 is a perspective view with a part cut away, showing the external appearance and internal structure of a lead-acid battery according to an embodiment of the present invention.
Fig. 3 is a graph showing the Log differential pore volume distribution of a separator according to an embodiment of the present invention.
Fig. 4 is a graph showing the Log differential pore volume distribution of a conventional separator.

MODE FOR CARRYING OUT THE INVENTION

The separator for lead-acid battery according to the present invention is defined by claim 1.
One aspect of the present invention also includes a lead-acid battery including a positive electrode plate, a negative electrode plate, and the above separator interposed between the positive electrode plate and the negative electrode plate.
Generally, a separator used in a lead-acid battery is required to have high electrolyte solution diffusivity and low resistance and the like. Therefore, heretofore, it is not common to increase the pore tortuosity, and the tortuosity of a conventional separator is 3 or less. The tortuosity of the separator is not necessarily determined by a pore volume or an average pore diameter, and even if the pore volume or the average pore diameter is the same, the tortuosity of the separator may be different. In the above aspect of the present invention, by increasing the pore tortuosity of the separator to 10 or more, a penetration short circuit can be largely suppressed as compared with the case where the tortuosity is less than 10. When the tortuosity is 10 or more, many pores having a small pore diameter are formed even if the pore volume or the average pore diameter is the same. Therefore, it is considered that dendrite of metal lead is less likely to penetrate into the separator. Since many small pores are formed, high electrolyte solution diffusivity and low resistance are likely to be secured, whereby a high capacity is likely to be obtained in the lead-acid battery.
The tortuosity is preferably 70 or less. In this case, high electrolyte solution diffusivity is likely to be secured, and the resistance of the separator is likely to be suppressed low, which is more advantageous from the viewpoint of increasing the capacity of the lead-acid battery.
The pore tortuosity is obtained by a mercury intrusion method. More specifically, the tortuosity is represented by the following formula.

## [Expression 1]

$$\xi = \sqrt{\frac{\rho}{24K(1 + \rho V_{tot})} \times X}$$

($\xi$: tortuosity, $\rho$: density, K: penetration rate, $V_{tot}$: total pore volume, X: differential pore distribution)

A sample obtained by cutting the separator into a size of 20 mm in length $\times$ 5 mm in width is measured for the density, the total pore volume, the penetration rate, and the differential pore distribution using a mercury porosimeter (Autopore IV9510 manufactured by Shimadzu Corporation). A pressure range for measurement is set to 4 psia ($\approx$ 27.6 kPa) or more and 60,000 psia ($\approx$ 414 MPa) or less. In pore distribution, a range of a pore diameter of 0.01 $\mu$m or more and 50 $\mu$m or less is used.

The sample for measurement is produced by cutting an unused separator or a separator taken out from a disassembled lead-acid battery, cleaned, and dried to the above size. The separator taken out from the lead-acid battery is cleaned and dried in the following procedure. The separator taken out from the lead-acid battery is immersed in pure water for 1 hour to remove sulfuric acid in the separator. The separator is then taken out, and allowed to stand for 16 hours or more in a 25°C environment for drying. When the separator is taken out from the lead-acid battery, the separator is taken out from a fully charged lead-acid battery.

Herein, the fully charged state of the lead-acid battery is set by the definition of JIS D 5301: 2006. More specifically, the fully charged state is a state where the lead-acid battery is charged at a current of 1/20 of a numerical value described in a rated capacity until a terminal voltage during charge measured every 15 minutes or a temperature-converted electrolyte solution density has a constant value three successive times. The lead-acid battery is charged in a state where the electrolyte solution of the lead-acid battery is filled to a specified liquid level.

The fully charged lead-acid battery is a fully charged formed lead-acid battery. The lead-acid battery may be fully charged immediately after formation or after a lapse of time from forming (for example, after formation, a lead-acid battery during use (preferably at the initial stage of use) may be fully charged). The battery in the initial stage of use refers to a battery that has not been used for a long time and has hardly deteriorated.

The pore volume of the separator for lead-acid battery is preferably 0.70 cm$^3$/g or more and 1.60 cm$^3$/g or less. When the pore volume is within such a range, the high capacity is likely to be secured while the penetration short circuit is suppressed.

The average pore diameter of the separator for lead-acid battery is preferably 0.01 $\mu$m or more and 0.25 $\mu$m or less. When the average pore diameter is within such a range, the high capacity is likely to be secured while the penetration short circuit is suppressed.

The pore volume and the average pore diameter are measured by a mercury intrusion method. More specifically, a sample obtained by cutting a separator into a size of 20 mm in length $\times$ 5 mm in width is measured using a mercury porosimeter (Autopore IV9510 manufactured by Shimadzu Corporation). For the average pore diameter, a median pore diameter in pore distribution measured by the mercury porosimeter is used. The sample is prepared as with the case of the tortuosity. The measurement conditions by the mercury porosimeter are the same as those in the case the tortuosity.

The separator for lead-acid battery may contain 8% by mass or more and 20% by mass or less of an oil. The content of the oil is a value measured for an unused separator or a separator taken out from the lead-acid battery, cleaned, and dried in the same procedure as described above. That is, according to the above aspect of the present invention, the pore tortuosity can be set within the above range for the lead-acid battery in the initial stage in which the separator contains such an amount of the oil.

The pore volume or the average pore diameter can be set within the above range. Therefore, since the proportion of relatively large pores is reduced, a penetration short circuit can be effectively suppressed, and many relatively small pores are present, whereby a high capacity is likely to be obtained.

The content of the oil is calculated from the unused separator or the above dried separator in the following procedure. First, 0.5 g (initial sample mass: $m_0$) of a sample obtained by cutting an unused or dried separator into a strip is weighed and collected. When the separator includes a rib part, the sample is collected from a region including no rib part. The sample is placed in a glass beaker having an appropriate size, and 50 mL of n-hexane is added into the glass beaker. Next, the oil content contained in the sample is eluted into n-hexane by applying ultrasonic waves to the sample together with the beaker for about 30 minutes. The sample is taken out, dried in an air atmosphere at room temperature (temperature: 20°C or higher and 35°C or lower), and then weighed to obtain a mass ($m_1$) of the sample from which the oil has been removed. The content of the oil is calculated by the following formula.

$$\text{Content of Oil (\% by Mass)} = (m_0 - m_1)/m_0 \times 100$$

The separator for lead-acid battery contains inorganic particles. The separator contains the inorganic particles, which is likely to optimize the pore structure in the separator, whereby the tortuosity, the pore volume, and the average pore diameter can be relatively easily adjusted within the above ranges. As a result, the effect of suppressing the penetration short circuit is likely to be obtained, and a high capacity is easily secured.

The lead-acid battery is sometimes used in a poor charged state referred to as a partial state of charge (PSOC). For example, in an idling stop (IS) vehicle, the lead-acid battery is used in PSOC. In the IS vehicle, the concentration of sulfuric acid in the electrolyte solution during discharge is significantly reduced, so that a large amount of lead ions are eluted, and metal lead is apt to precipitate. Therefore, the penetration short circuit is apt to occur. In the separator or the lead-acid battery according to the above aspect, the pore tortuosity of the separator is controlled as described above, whereby the penetration short circuit can be effectively suppressed even when the separator or the lead-acid battery is used for an IS power supply in which the penetration short circuit is apt to occur.

Hereinafter, specific example of the separator for lead-acid battery according to an embodiment of the present invention will be described with reference to the drawings. However, the present invention is not limited to the following embodiment.

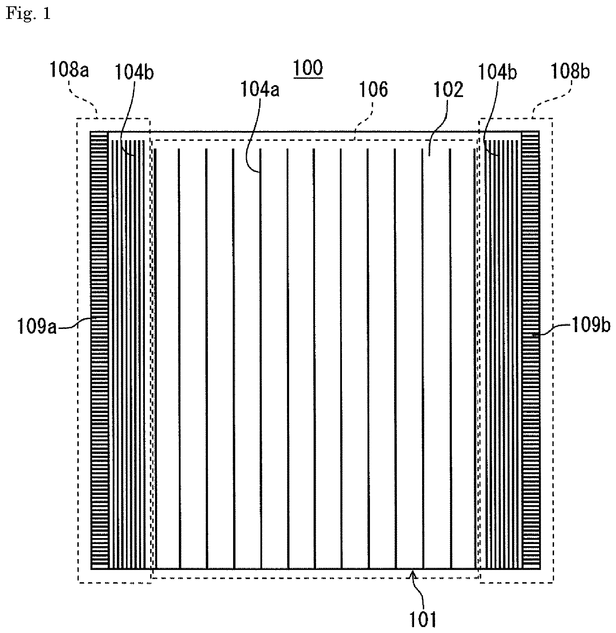

Fig. 1 is a schematic plan view showing the external appearance of a bag-shaped separator 100 according to an embodiment of the present invention. The bag-shaped separator 100 has a shape in which a sheet-shaped microporous film having an area twice that of a bag is folded in half at a crease 101. That is, the sheet-shaped microporous film is divided into a first portion and a second portion facing each other by the crease 101.

Each of the first portion and the second portion includes a main part 106 facing an electrode plate, and end parts 108a and 108b provided on both sides of the main part 106 and the crease 101. Most of the main part 106 and the end parts 108a and 108b are composed of a base part 102. A plurality of main ribs 104a are provided on the outer surface of the base part 102 of the main part 106, and a plurality of mini ribs 104b having a protrusion height smaller than that of the main ribs 104a are provided on the outer surface of the base part 102 of the end parts 108a and 108b.

The main ribs 104a and the mini ribs 104b have an effect of improving the diffusivity of the electrolyte solution in the vicinity of the electrode plate, for example.

Neither the main ribs 104a nor the mini ribs 104b are indispensable. At least one of the main ribs 104a and the mini ribs 104b may be provided on the inner surface of the base part 102 (bag), or may be provided on both the inner surface and the outer surface.

The end parts 108a and 108b of each of the first portion and the second portion respectively include welded parts 109a and 109b. In the welded parts 109a and 109b, the first portion and the second portion facing each other are joined by welding.

The thickness of the base part 101 is, for example, 0.15 mm or more and 0.25 mm or less, or 0.15 mm or more and 0.20 mm or less. The thickness of the base part is obtained by measuring and averaging the thicknesses of the base part at five optionally selected points in the cross-sectional photograph of the separator.

The height of the main rib 104a is, for example, 0.4 mm or more and 0.8 mm or less. The height of the mini rib 104b is, for example, 0.05 mm or more and 0.3 mm or less. The height of each rib is obtained by averaging the heights of the ribs from the base part measured at 10 optionally selected points on one main surface of the base part.

The thickness of the base part and the height of each rib are obtained for the unused separator or the separator taken out from the lead-acid battery, cleaned, and dried in the above-described procedure.

The embodiment shown in Fig. 1 is only one aspect of the present invention. For example, a non-bag-shaped sheet-shaped separator may be sandwiched between the negative electrode plate and the positive electrode plate.

The separator is obtained, for example, by extrusion-molding a resin composition containing a polyolefin, a pore-forming additive, and a penetrant (surfactant) into a sheet, and then partially removing the pore-forming additive. By removing the pore-forming additive, micropores are formed in a polyolefin matrix. The resin composition may further contain inorganic particles.

In general, the pore volume of the separator changes depending on the amount of the remaining pore-forming additive. If the amount of the pore-forming additive remaining in the separator is small, the number of pores in the separator is large, so that the resistance of the separator is low, but the effect of suppressing the penetration short circuit is low. Meanwhile, if a large amount of pore-forming additive remains in the separator, the number of pores in the separator is small, so that the resistance of the separator increases, but the penetration short circuit is likely to be suppressed. Therefore, when the pore-forming additive is partially removed, it is important to control the amount of the pore-forming additive removed.

As the polyolefin, for example, a polymer containing at least ethylene or propylene as a monomer unit is preferable. As the polyolefin, for example, a copolymer containing polyethylene, polypropylene, ethylene or propylene as a monomer unit (for example, an ethylene-propylene copolymer or the like) is more preferable, and polyethylene is particularly preferable.

As inorganic particles, for example, ceramic particles made of silica, alumina, and titania and the like are preferable.

The amount of the inorganic particles in the separator is, for example, 100 parts by mass or more and 300 parts by mass or less, and may be 120 parts by mass or more and 200 parts by mass or less, per 100 parts by mass of the polyolefin.

The content of the inorganic particles in the separator is 40% by mass or more and 80% by mass or less, and may be 50% by mass or more and 75% by mass or less, or 50% by mass or more and 70% by mass or less.

The content of the inorganic particles in the separator is obtained in the following procedure using the separator taken out from the lead-acid battery, cleaned, and dried in the above-described procedure as a measurement sample. The measurement sample is accurately weighed, then placed in a platinum crucible, and heated with a bunsen burner until no white smoke is emitted. Next, in an electric furnace (in an oxygen flow, 550°C), the sample is heated for about 1 hour for ashing, and the ashing product is weighed. A ratio of the mass of the ashing product to the mass of the above measurement sample is calculated, and taken as the content (% by mass) of the above inorganic particles.

As the pore-forming additive, a solid pore-forming additive such as a polymer powder and/or a liquid pore-forming additive such as an oil (a mineral oil and a synthetic oil and the like) can be used. Alternatively, as the pore-forming additive, both the solid pore-forming additive and the liquid pore-forming additive can be used.

The amount of the pore-forming additive in the separator cannot be completely determined because it may change depending on the type, but it is, for example, 30 parts by mass or more and 60 parts by mass or less per 100 parts by mass of the polyolefin.

In particular, when the oil is used, the oil remains on some level in the pores even in the initial state of the lead-acid battery, and the pore structure of the separator is optimized to facilitate the control of the tortuosity. The content of the oil in the separator is preferably 8% by mass or more, and more preferably 10% by mass or more. The content of the oil in the separator is preferably 20% by mass or less, and may be 16% by mass or less. These lower limit values and upper limit values can be optionally combined. By setting the content of the oil within such a range, the penetration short circuit can be effectively suppressed, and a high capacity is likely to be obtained. The content of the oil in the separator is measured in the procedure described above.

The ribs may be formed in a sheet during extrusion molding, or may be formed by pressing a sheet with a roller having grooves corresponding to the ribs after the sheet is formed or after the pore-forming additive is removed.

In the separator according to the above aspect, the pore tortuosity is 10 or more, and may be 30 or more or 40 or more, or 50 or more. When the separator has such a tortuosity, a high penetration short circuit suppressing effect is obtained. The pore tortuosity is, for example, 150 or less, and may be 100 or less. From the viewpoint of being likely to secure a high capacity, the tortuosity is preferably 90 or less, and may be 80 or less or 70 or less. These lower limit values and upper limit values can be optionally combined.

The tortuosity can be adjusted by adjusting the affinity of the polyolefin with the pore-forming additive, selecting the type and/or particle size of the inorganic particles, and/or adjusting the amount of functional groups and/or atoms and the like present on the surface of the inorganic particles. For example, if the amount of -ONa groups on the surface of the inorganic particles is reduced (for example, if the content of Na in the separator is reduced to 1000 $\mu$g/cm$^3$ or less or 500 $\mu$g/cm$^3$ or less), the pore structure of the separator is likely to be controlled, although the reason is unclear. More specifically, in the Log differential pore volume distribution of the separator, a peak peculiar to a region of 0.03 $\mu$m or less (preferably less than 0.03 $\mu$m (for example, around 0.02 $\mu$m)) is observed. As a result, a large tortuosity is obtained and the total pore volume is increased by about 10% as compared with a conventional separator in which no clear peak is observed within such a range. Such a change in the pore volume distribution is inferred to be related to reduction in the resistance component of the separator even if the tortuosity is increased. From the viewpoint of being likely to adjust the amount of -ONa groups, silica particles are preferably used as the inorganic particles.

If the content of Na in the inorganic particles is reduced, the content of Na in the separator also decreases. Therefore, if the content of Na in the separator taken out from the lead-acid battery is measured, the content of Na in the inorganic particles can be estimated to some extent. The content of Na in the separator is the content of Na ($\mu$g) per 1 cm$^3$ of the apparent volume of the separator.

The content of Na in the separator is measured by using the separator taken out from the lead-acid battery, cleaned, and dried in the above-described procedure as a measurement sample. The content of Na in the separator is obtained by analysis according to inductively coupled plasma emission spectroscopy (ICP-AES). Specifically, first, a measurement sample having an area of about 15 cm$^2$ is placed in a platinum crucible, and heated with a bunsen burner until no white smoke is emitted. Next, in an electric furnace (in an oxygen flow, 550°C), the sample is heated for about 1 hour for ashing. To the sample after ashing, 5 mL of a nitric acid aqueous solution having a concentration of 30% by mass is added, and 2 mL of a hydrofluoric acid aqueous solution having a concentration of 50% by mass is further added, followed by stirring, to completely dissolve the ash in the acid. Next, ion-exchanged water is added to the acid solution of the ash to adjust the volume, and the concentration of Na is then measured with an ICP emission spectrometer. As a measuring apparatus, iCAP7400 manufactured by Thermo Fisher Scientific Co., Ltd. is used. The mass of the measurement sample and the amount of the acid to be used and the like may be appropriately changed depending on the content of Na contained in the separator.

The Log differential pore volume distribution of the separator is obtained from pore distribution measured as with the pore volume and the average pore diameter.

The pore volume of the separator is, for example, 0.70 cm$^3$/g or more, and preferably 0.80 cm$^3$/g or more. The pore volume of the separator is, for example, 1.60 cm$^3$/g or less, and may be 1.55 cm$^3$/g or less. When the pore volume is within such a range, the high capacity is likely to be secured while the penetration short circuit is suppressed. From the viewpoint of securing a higher capacity, the pore volume is preferably 0.80 cm$^3$/g or more, and more preferably 1.00 cm$^3$/g or more or 1.10 cm$^3$/g or more. From the same viewpoint, it is preferable that the pore volume is 1.55 cm$^3$/g or less. These lower limit values and upper limit values can be optionally combined. The pore volume can be adjusted by adjusting the affinity of the polyolefin with the pore-forming additive or the penetrant, selecting the type or particle size of the inorganic particles, adjusting the amount of the penetrant, or adjusting the amount of the pore-forming additive removed.

The average pore diameter of the separator is, for example, 0.01 $\mu$m or more, and preferably 0.02 $\mu$m or more. The average pore diameter is, for example, 0.25 $\mu$m or less, and preferably 0.20 $\mu$m or less. These lower limit values and upper limit values can be optionally combined. When the pore volume is within such a range, the high capacity is likely to be secured while the penetration short circuit is suppressed. From the viewpoint of securing a higher capacity, the average pore diameter is preferably 0.02 $\mu$m or more or preferably 0.20 $\mu$m or less. The average pore diameter can be adjusted by adjusting the affinity of the polyolefin with the pore-forming additive or the penetrant, adjusting the dispersibility of the pore-forming additive, selecting the type or particle size of the inorganic particles, or adjusting the amount of the penetrant.

The separator according to the above aspect has an optimized pore structure, and can contain small pores (for example, pores (hereinafter referred to as first pores) having a pore diameter of 0.03 $\mu$m or less (or less than 0.03 $\mu$m)). The formation of the first pores in the separator makes it possible to more easily secure high diffusibility of the electrolyte solution while securing low resistance of the separator. From the viewpoint of further improving such an effect, the pore volume of the first pores is preferably 0.20 cm$^3$/g or more, and more preferably 0.23 cm$^3$/g or more or 0.24 cm$^3$/g or more. For the same reason, the ratio of the pore volume A1 of the first pores to the pore volume (pore volume A) of the separator is preferably 21% or more, and more preferably 22% or more. The upper limit of the pore volume A1 of the first pores is not particularly limited as long as it is equal to or less than the upper limit of the pore volume A, and may be 1 cm$^3$/g or less or 0.5 cm$^3$/g or less. The upper limit of the ratio of the pore volume A1 to the pore volume A is not also particularly limited as long as it is 100% or less, and may be 50% or less or 30% or less. For each of the pore volume A1 and its ratio, the lower and upper limit values thereof can be optionally combined. The pore volume A1 is measured according to the case of the pore volume A using the range of the pore diameter of 0.03 $\mu$m or less (or less than 0.03 $\mu$m) in the pore distribution. By calculating the ratio of the measured value to the pore volume A, the ratio (%) of the pore volume A1 is obtained.

(Electrolyte Solution)

The electrolyte solution is an aqueous solution containing sulfuric acid. The electrolyte solution may contain Al ions and/or Na ions. The electrolyte solution may contain other additives. The electrolyte solution may be gelled as necessary.

From the viewpoint of improving the effect of suppressing the penetration short circuit, the electrolyte solution preferably contains Al ions. The concentration of the Al ions in the electrolyte solution is, for example, 0.02 mol/L or more and 0.2 mol/L or less. The Al ions can be contained in the electrolyte solution, for example, by dissolving an aluminum compound (for example, an aluminum salt of an inorganic acid such as aluminum sulfate) in the electrolyte solution.

The concentration of the Al ions in the electrolyte solution is obtained by subjecting the electrolyte solution taken out from the fully charged formed lead-acid battery to ICP-AES atomic absorption spectrometry. More specifically, the electrolyte solution is weighed and collected from the lead-acid battery, and ion-exchanged water is added to adjust the volume. The concentration of the Al ions is then measured by an ICP emission spectrometer. As a measuring apparatus, iCAP7400 manufactured by Thermo Fisher Scientific Co., Ltd. is used.

The specific gravity of the electrolyte solution at 20°C in the fully charged formed lead-acid battery is, for example, 1.10 g/cm$^3$ or more and 1.35 g/cm$^3$ or less.

(Negative Electrode Plate)

The negative electrode plate of the lead-acid battery is composed of a negative electrode current collector and a negative electrode material. The negative electrode material is obtained by removing the negative electrode current collector from the negative electrode plate. The negative electrode current collector may be formed by casting lead (Pb) or a lead alloy, or may be formed by processing a lead or lead alloy sheet. Examples of the processing method include expanding processing and punching processing. If a negative electrode grid is used as the negative electrode current collector, the negative electrode material is likely to be supported, which is preferable.

The lead alloy used for the negative electrode current collector may be any of a Pb-Sb-based alloy, a Pb-Ca-based alloy, and a Pb-Ca-Sn-based alloy. The lead or the lead alloy may further contain at least one selected from the group consisting of Ba, Ag, Al, Bi, As, Se, and Cu and the like as an additive element.

The negative electrode material contains a negative electrode active material (lead or lead sulfate) having a capacity developed in an oxidation-reduction reaction. The negative electrode material may contain an expander, a carbonaceous material such as carbon black, and barium sulfate and the like, and may contain other additives as necessary.

The negative active material in a charged state is spongy lead, but an unformed negative electrode plate is usually produced using a lead powder.

The negative electrode plate can be formed by filling a negative electrode current collector with a negative electrode paste, followed by curing and drying to produce an unformed negative electrode plate, and thereafter forming the unformed negative electrode plate. The negative electrode paste is produced by adding water and sulfuric acid to a lead powder, an organic expander, and as necessary, various additives, followed by mixing. The unformed negative electrode plate is preferably cured at a temperature higher than room temperature and a high humidity in a curing step.

The negative electrode plate can be formed by charging an element including an unformed negative electrode plate in a state where the element is immersed in an electrolyte solution containing sulfuric acid in the container of the lead-acid battery. However, the formation may be performed before the assembly of the lead-acid battery or the element. Spongy lead is produced by the formation.

(Positive Electrode Plate)

Examples of the positive electrode plate of the lead-acid battery include pasted type and clad type positive electrode plates.

The pasted type positive electrode plate includes a positive electrode current collector and a positive electrode material. The positive electrode material is held by the positive electrode current collector. In the pasted type positive electrode plate, the positive electrode material is obtained by removing the positive electrode current collector from the positive electrode plate. The positive current collector may be formed in the same manner as in the negative current collector, and can be formed by casting lead or a lead alloy or processing a lead or lead alloy sheet.

The clad type positive electrode plate includes a plurality of porous tubes, a spine inserted into each of the tubes, a positive electrode material filled in each of the tubes into which the spine is inserted, and a joint for connecting the plurality of tubes. In the clad type positive electrode plate, the positive electrode material is obtained by removing the tube, the spine, and the joint from the positive electrode plate.

The lead alloy used for the positive electrode current collector is preferably a Pb-Ca-based alloy and a Pb-Ca-Sn-based alloy in terms of corrosion resistance and mechanical strength. The positive electrode current collector may have lead alloy layers having different compositions, and a plurality of alloy layers may be provided. A Pb-Ca-based alloy or a Pb-Sb-based alloy is preferably used for the spine.

The positive electrode material contains a positive active material (lead dioxide or lead sulfate) that develops a capacity in an oxidation-reduction reaction. The positive electrode material may contain other additives as necessary.

The unformed pasted type positive electrode plate is obtained by filling a positive current collector with a positive electrode paste, followed by curing and drying in the same manner as in the negative electrode plate. Thereafter, the unformed positive electrode plate is formed. The positive electrode paste is prepared by mixing a lead powder, additives, water, and sulfuric acid.

The clad type positive electrode plate is formed by filling each of a plurality of tubes into which a spine is inserted with a lead powder or a slurry lead powder, and causing a joint to connect the tubes.

(Fiber Mat)

The lead-acid battery may further include a fiber mat interposed between the positive electrode plate and the negative electrode plate. The fiber mat contains a sheet-like fiber aggregate unlike the separator. As such a fiber aggregate, a sheet in which fibers insoluble in an electrolyte solution are entangled is used. Examples of the sheet include a non-woven fabric, a woven fabric, and a knitted fabric. For example, 60% by mass or more of the fiber mat is formed of fibers.

As the fiber, a glass fiber, a polymer fiber, and a pulp fiber and the like can be used. Among the polymer fiber, a polyolefin fiber is preferable.

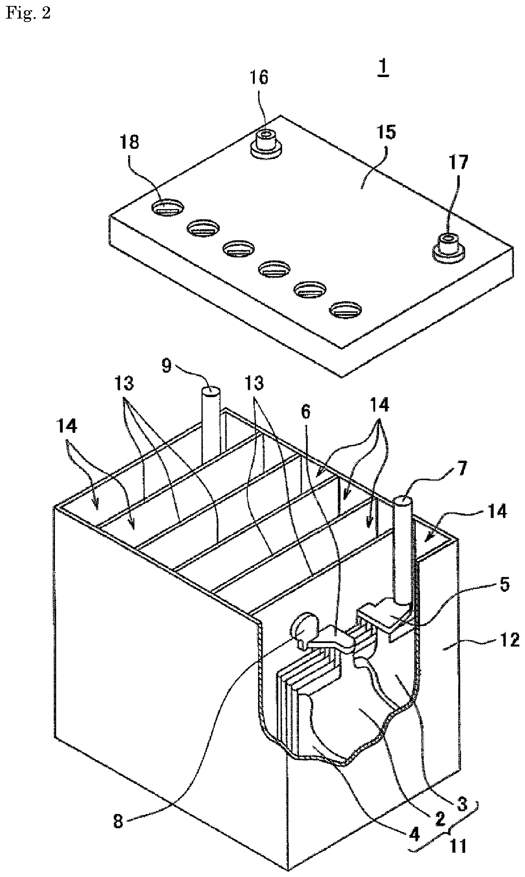

Fig. 2 shows the external appearance of an example of a lead-acid battery according to an embodiment of the present invention.

A lead-acid battery 1 includes a container 12 that accommodates elements 11 and an electrolyte solution (not shown). The container 12 is partitioned into a plurality of cell chambers 14 by a partition 13. One element 11 is accommodated in each cell chamber 14. An opening part of the container 12 is closed with a lid 15 including a negative electrode terminal 16 and a positive electrode terminal 17. The lid 15 includes a vent plug 18 provided in each cell chamber. At the time of water addition, the vent plug 18 is removed to replenish a water addition solution. The vent plug 18 may have a function for discharging a gas generated in the cell chamber 14 to the outside of the battery.

The element 11 is configured by laminating a plurality of negative electrode plates 2 and a plurality of positive electrode plates 3 with a separator 4 interposed therebetween. Here, the bag-like separator 4 that accommodates the negative electrode plate 2 is shown, but the form of the separator is not particularly limited. In the cell chamber 14 positioned on one end part of the container 12, a negative electrode shelf part 6 that connects the plurality of negative electrode plates 2 in parallel is connected to a through-connector 8, and a positive electrode shelf part 5 that connects the plurality of positive electrode plates 3 in parallel is connected to a positive pole 7. The positive pole 7 is connected to the positive electrode terminal 17 disposed outside the lid 15. In the cell chamber 14 positioned on the other end part of the container 12, a negative pole 9 is connected to the negative electrode shelf part 6, and the through-connector 8 is connected to the positive electrode shelf part 5. The negative pole 9 is connected to the negative electrode terminal 16 disposed outside the lid 15. Each through-connector 8 passes through a through-hole provided in the partition 13, and connects the elements 11 of the cell chambers 14 adjacent to each other in series.

The penetration short circuit resistance and capacity (20-hour rate capacity) of the lead-acid battery are evaluated in the following procedure.

(1) Penetration Short Circuit Resistance

A lead-acid battery having a rated voltage of 12 V is charged and discharged in a constant temperature water tank at 25°C in steps 1 to 5 shown in Table 1. Next, the lead-acid battery is disassembled, and the presence or absence of lead penetration marks in the separator is confirmed. The penetration marks are similarly confirmed for a total of 20 lead-acid batteries, and the penetration short circuit resistance property is evaluated based on the number of the batteries in which no penetration marks are confirmed in the 20 batteries. The CA is a current of a numerical value described in a rated capacity.

[Table 1]

| Steps | Contents | Test conditions | |
|---|---|---|---|
| | | Current, voltage, resistance, number of times | Conditions for termination |
| 1 | CC discharge | 0.05CA | 1.0 V/cell |
| 2 | Leaving of resistance | 10Ω | 28 days |
| 3 | CV charge | 2.4 V/cell, maximum of 50A | 10 minutes |
| 4 | CC charge | 0.05CA | 27 hours |
| 5 | Repetition of steps 1 to 4 | 5 | |
| CC: constant current, CV: constant voltage 0.05 CA: current of 1/20 of numerical value described in rated capacity | | | |

(2) 20-Hour Rate Capacity

Based on SBAS0101: 2014, a 20-hour rate capacity is measured in the following procedure.

(a) The lead-acid battery is placed in a water chamber at 25°C $\pm$ 2°C throughout the entire test period. A water surface is set to 15 mm or more and 25 mm or less downward from the top surface of the lead-acid battery. When several lead-acid batteries are placed in the same water tank, a distance between the lead-acid batteries and a distance between the lead-acid battery and a water tank wall are set to at least 25 mm.

b) After about 1 hour passes since the battery is fully charged, an electrolyte solution temperature of any cell in the center is confirmed to be 25 + 2°C. After the electrolyte solution temperature is confirmed, the lead-acid battery is discharged at a 20-hour rate current $I_{20}$ (1/20 current of the value described in the rated capacity) until a terminal voltage drops to 10.50 $\pm$ 0.05 V, and a discharge duration time t is recorded in time unit.

c) The 20-hour rate capacity $C_{2,e}$ of the lead-acid battery is calculated by the following formula.

$$C_{20,e} = I_{20} \times t$$

EXAMPLES

Hereinafter, the present invention will be specifically described based on Examples and Comparative Examples, but the present invention is not limited to the following Examples.

<<Lead-Acid Batteries A1 to A27 and R1 to R4>>

(1) Production of Negative Electrode Plate

Lead oxide, carbon black, barium sulfate, lignin, a reinforcing material (synthetic resin fiber), water, and sulfuric acid were mixed to prepare a negative electrode paste. The negative electrode paste was filled in a mesh part of an expanded grid made of an antimony-free Pb-Ca-Sn-based alloy, cured, and dried to obtain an unformed negative electrode plate having a width of 100 mm, a height of 110 mm, and a thickness of 1.3 m. The amounts of carbon black, barium sulfate, lignin, and synthetic resin fiber were respectively adjusted to 0.3% by mass, 2.1% by mass, 0.1% by mass, and 0.1% by mass when measured in the fully charged state of the formed negative electrode plate.

(2) Production of Positive Electrode Plate

Lead oxide, a reinforcing material (synthetic resin fiber), water, and sulfuric acid were mixed to prepare a positive electrode paste. The positive electrode paste was filled in a mesh part of an expanded grid made of an antimony-free Pb-Ca-Sn-based alloy, cured, and dried to obtain an unformed positive electrode plate having a width of 100 mm, a height of 110 mm, and a thickness of 1.6 mm.

(3) Separator

A resin composition containing 100 parts by mass of polyethylene, 160 parts by mass of silica particles, 80 parts by mass of a pore-forming additive (paraffin oil), and a trace amount of a penetrant was extrusion-molded into a sheet, and the pore-forming additive was then partially removed to produce a microporous film in which a pore tortuosity, a pore volume, and an average pore diameter obtained in the procedure described above were values shown in Tables 2 to 7. Next, each sheet-shaped microporous film was folded in half to form a bag, and a welded part was formed in each of end parts to obtain a bag-shaped separator as shown in Fig. 1.
The composition of the resin composition containing polyethylene, silica particles, a pore-forming additive, and a penetrant can be optionally changed depending on the design and production conditions of the separator, and/or the usage of the lead-acid battery, and the like. The content of Na in the separator and/or the amount of the pore-forming additive removed, and the like are/is adjusted as necessary.
On the outer surface of the bag-shaped separator, a plurality of stripe-shaped main ribs and mini ribs having protrusion heights of 0.5 mm and 0.18 mm were provided. A pitch of the main ribs was set to 9.8 mm, and a pitch of the mini ribs was set to 1 mm. The total thickness of the separator was set to 0.8 mm. The content of the silica particles in the separator was 60% by mass. The total thickness of the separator, the protruding height of the ribs, the pitch of the ribs, and the content of the silica particles are values obtained for the separator before the production of the lead-acid battery, but these are almost the same as values measured in the procedure described above for the separator taken out from the produced lead-acid battery.

(4) Production of Lead-Acid Battery

Each of the unformed negative electrode plates was housed in a bag-shaped separator, and an element was formed by seven unformed negative electrode plates and six unformed positive electrode plates per cell. Ears of the positive electrode plates and ears of the negative electrode plates were respectively welded to a positive electrode shelf part and a negative electrode shelf part by a cast-on strap (COS) method. The element was inserted into a polypropylene container, and an electrolyte solution was injected into the polypropylene container. Formation was performed in the container, and flooded-type lead-acid batteries A1 to A27 and R1 to R4 having a rated voltage of 12 V and a rated capacity of 40 Ah (20-hour rate capacity (capacity when discharged at a current of 1/20 of the numerical value described in the rated capacity) were assembled. In the container, six elements are connected in series.
The electrolyte solution used was an aqueous sulfuric acid solution in which aluminum sulfate was dissolved. The specific gravity of the electrolyte solution after formation at 20°C was 1.285, and the concentration of Al ions was 0.2% by mass.

[Evaluation 1: Penetration Short Circuit Resistance]

In the procedure described above, the presence or absence of the penetration short circuit was observed for 20 lead-acid batteries for each of A1 to A27 and R1 to R4, and the penetration short circuit resistance was evaluated according to the number of the lead-acid batteries in which no penetration short circuit was confirmed.

[Evaluation 2: 20-Hour Rate Capacity]

The 20-hour rate capacity of each lead-acid battery was obtained in the procedure described above. The 20-hour rate capacity of each lead-acid battery was evaluated by a ratio thereof to the 20-hour rate capacity of the lead-acid battery R1 was set to 100.

[Evaluation 3: Content of Oil in Separator]

The content of the oil in the separator taken out from the lead-acid battery was obtained in the procedure described above.

[Evaluation 4: Log Differential Pore Volume Distribution]

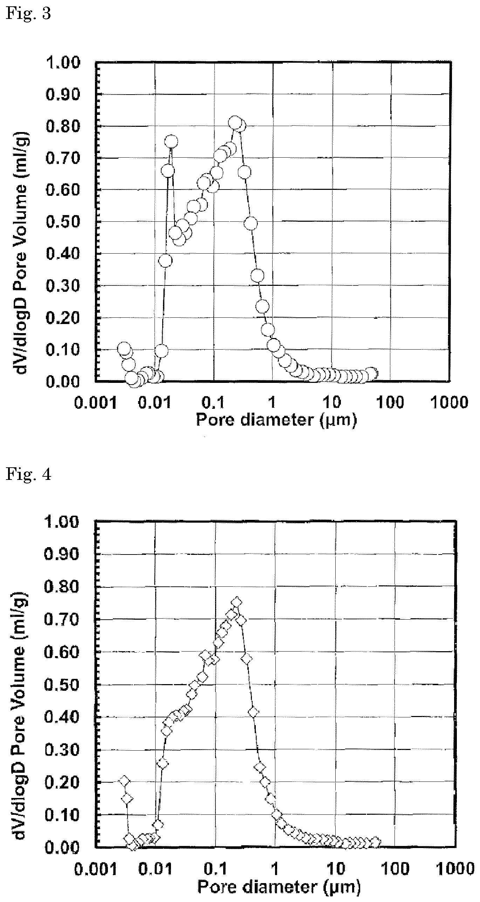

The Log differential pore volume distribution of the separator of the battery A14 was obtained in the procedure described above. The results (relationship between Log differential pore volume (dV/dlogD) and pore diameter) are shown in Fig. 3. In the same manner, the Log differential pore volume distribution of the separator of the battery R1 was obtained. The results are shown in Fig. 4.

The results of the evaluations 1 and 2 are shown in Tables 2 to 7. Samples A1, A7, A11, A15, A19, A20 and A26 are not according to the invention.

[Table 2]

| | Tortuosity | Content of oil (% by mass) | Pore volume (cm$^3$/g) | Average pore diameter ($\mu$m) | Penetration short circuit resistance (number/20) | 20 hour-rate capacity ratio |
|---|---|---|---|---|---|---|
| R1 | 2.8 | 16.0 | 1.18 | 0.08 | 7 | 100 |
| A1 | 5 | | | | 10 | 100 |
| A2 | 10 | | | | 10 | 100 |
| A3 | 30 | | | | 14 | 100 |
| A4 | 50 | | | | 15 | 100 |
| A5 | 70 | | | | 18 | 95 |
| A6 | 90 | | | | 20 | 80 |

[Table 3]

| | Tortuosity | Content of oil (% by mass) | Pore volume (cm$^3$/g) | Average pore diameter ($\mu$m) | Occurrence cycle of penetration short circuit | Penetration short circuit resistance (number/20) |
|---|---|---|---|---|---|---|
| R1 | 2.8 | | | | 4 | 105 |
| A7 | 5 | | | | 9 | 85 |
| A8 | 10 | 17.5 | 0.80 | 0.20 | 9 | 90 |
| A9 | 30 | | | | 13 | 90 |
| A10 | 70 | | | | 14 | 85 |

[Table 4]

| | Tortuosity | Content of oil (% by mass) | Pore volume (cm³/g) | Average pore diameter (μm) | Penetration short circuit resistance (number/20) | 20 hour-rate capacity ratio |
|---|---|---|---|---|---|---|
| R3 | 2.8 | | | | 2 | 115 |
| A11 | 5 | | | | 9 | 95 |
| A12 | 10 | 13.0 | 1.55 | 0.20 | 10 | 110 |
| A13 | 30 | | | | 14 | 110 |
| A14 | 70 | | | | 9 | 95 |

[Table 5]

| | Tortuosity | Content of oil (% by mass) | Pore volume (cm³/g) | Average pore diameter (μm) | Penetration short circuit resistance (number/20) | 20 hour-rate capacity ratio |
|---|---|---|---|---|---|---|
| R4 | 2.8 | | | | 5 | 105 |
| A15 | 5 | | | | 10 | 90 |
| A16 | 10 | 13.0 | 1.55 | 0.02 | 15 | 110 |
| A17 | 30 | | | | 15 | 110 |
| A18 | 70 | | | | 16 | 85 |

As shown in Tables 2 to 5, even if the pore volume and the average pore diameter of the separator are the same, the pore tortuosity is different. When the tortuosity is 5 or more, the number of the lead-acid batteries in which the penetration short circuit is not observed is significantly increased as compared with the case where the tortuosity is less than 5, and therefore, the penetration short circuit resistance is found to be largely improved. From the viewpoint of securing higher penetration short circuit resistance, the tortuosity is 10 or more or, preferably, 30 or more.

The lead-acid batteries A1 to A18 can also secure a high 20-hour rate capacity. From the viewpoint of securing a higher capacity, the tortuosity is preferably 70 or less.

The reason why excellent penetration short circuit resistance is obtained while a high capacity is secured when the tortuosity is 5 or more is considered to be that the pore structure of the separator is optimized. As shown in Fig. 3, when the tortuosity is 5 or more, a peak peculiar to a region having a pore diameter of 0.03 μm or less (preferably less than 0.03 μm) is obtained in the Log differential pore volume distribution of the separator. Meanwhile, when the tortuosity is less than 5, such a peak can hardly be confirmed. As described above, when the tortuosity is 5 or more, many pores having a small pore diameter are formed, whereby it is considered that the penetration short circuit can be suppressed while the diffusivity of the electrolyte solution and the low resistance of the separator are secured.

For the lead-acid battery A14 and the lead-acid battery R1, the pore volume A1 of the first pores of the separator, and the ratio of the pore volume A1 to the pore volume A of the separator were obtained in the procedure described above. As a result, in the separator of the lead-acid battery R1, the pore volume A1 was 0.19 cm³/g, and the ratio of the pore volume A1 to the pore volume A was 20%. Meanwhile, in the separator of the lead-acid battery A14, the pore volume A1 is 0.24 cm³/g, and the ratio of the pore volume A1 to the pore volume A is 22%, both of which are more than those of the lead-acid battery R1. The difference between the numerical values is considered to largely affect the penetration short circuit resistance and resistance of the separator. The numerical values of the pore volume A1 and the ratio thereof are values obtained with pores having a pore diameter of less than 0.03 μm as the first pores.

[Table 6]

| | Tortuosity | Content of oil (% by mass) | Pore volume (cm³/g) | Average pore diameter (μm) | Penetration short circuit resistance (number/20) | 20 hour-rate capacity ratio |
|---|---|---|---|---|---|---|
| A19 | 5 | 18.0 | 0.70 | 0.25 | 8 | 80 |
| A7 | 5 | 17.5 | 0.80 | 0.20 | 9 | 85 |
| A1 | 5 | 16.0 | 1.18 | 0.08 | 10 | 100 |

(continued)

|  | Tortuosity | Content of oil (% by mass) | Pore volume (cm$^3$/g) | Average pore diameter ($\mu$m) | Penetration short circuit resistance (number/20) | 20 hour-rate capacity ratio |
|---|---|---|---|---|---|---|
| A15 | 5 | 13.0 | 1.55 | 0.02 | 10 | 90 |
| A11 | 5 | 13.0 | 1.55 | 0.20 | 9 | 95 |
| A20 | 5 | 11.5 | 1.60 | 0.02 | 13 | 80 |
| A21 | 10 | 17.5 | 0.80 | 0.02 | 10 | 85 |
| A8 | 10 | 17.5 | 0.80 | 0.20 | 9 | 90 |
| A2 | 10 | 16.0 | 1.18 | 0.08 | 10 | 100 |
| A16 | 10 | 13.0 | 1.55 | 0.02 | 15 | 110 |
| A12 | 10 | 13.0 | 1.55 | 0.20 | 10 | 110 |
| A22 | 30 | 17.5 | 0.80 | 0.02 | 14 | 85 |
| A9 | 30 | 17.5 | 0.80 | 0.20 | 13 | 90 |
| A3 | 30 | 16.0 | 1.18 | 0.08 | 14 | 100 |
| A17 | 30 | 13.0 | 1.55 | 0.02 | 15 | 110 |
| A13 | 30 | 13.0 | 1.55 | 0.20 | 14 | 110 |
| A4 | 50 | 16.0 | 1.18 | 0.08 | 15 | 100 |
| A23 | 70 | 18.0 | 0.70 | 0.25 | 11 | 70 |
| A10 | 70 | 17.5 | 0.80 | 0.20 | 14 | 85 |
| A5 | 70 | 16.0 | 1.18 | 0.08 | 18 | 95 |
| A18 | 70 | 13.0 | 1.55 | 0.02 | 16 | 85 |
| A14 | 70 | 13.0 | 1.55 | 0.20 | 9 | 95 |
| A24 | 70 | 11.5 | 1.60 | 0.02 | 18 | 90 |
| A25 | 90 | 11.5 | 1.60 | 0.25 | 17 | 80 |

As shown in Table 6, when the pore tortuosity is 5 or more, high penetration short circuit resistance is obtained even if the pore volume and/or the average pore diameter change/changes. A high 20-hour rate capacity can be secured. The pore volume is preferably 0.70 cm$^3$/g or more and 1.60 cm$^3$/g or less. From the viewpoint of securing a higher capacity, the pore volume is preferably 0.80 cm$^3$/g or more and 1.55 cm$^3$/g or less.

[Table 7]

|  | Tortuosity | Content of oil (% by mass) | Pore volume (cm$^3$/g) | Average pore diameter ($\mu$m) | Penetration short circuit resistance (number/20) | 20 hour-rate capacity ratio |
|---|---|---|---|---|---|---|
| A19 | 5 | 18.0 | 0.70 | 0.25 | 8 | 80 |
| A7 | 5 | 17.5 | 0.80 | 0.20 | 9 | 85 |
| A11 | 5 | 13.0 | 1.55 | 0.20 | 9 | 95 |
| A1 | 5 | 16.0 | 1.18 | 0.08 | 10 | 100 |
| A15 | 5 | 13.0 | 1.55 | 0.02 | 10 | 90 |
| A20 | 5 | 11.5 | 1.60 | 0.02 | 13 | 80 |
| A26 | 5 | 13.0 | 1.55 | 0.01 | 10 | 75 |
| A23 | 70 | 18.0 | 0.70 | 0.25 | 11 | 70 |
| A27 | 70 | 17.5 | 0.80 | 0.25 | 11 | 75 |

(continued)

|  | Tortuosity | Content of oil (% by mass) | Pore volume ($cm^3/g$) | Average pore diameter ($\mu m$) | Penetration short circuit resistance (number/20) | 20 hour-rate capacity ratio |
|---|---|---|---|---|---|---|
| A10 | 70 | 17.5 | 0.80 | 0.20 | 14 | 85 |
| A14 | 70 | 13.0 | 1.55 | 0.20 | 9 | 95 |
| A5 | 70 | 16.0 | 1.18 | 0.08 | 18 | 95 |
| A18 | 70 | 13.0 | 1.55 | 0.02 | 16 | 85 |
| A24 | 70 | 11.5 | 1.60 | 0.02 | 18 | 90 |
| A28 | 70 | 13.0 | 1.55 | 0.01 | 17 | 70 |

As shown in Table 7, when the pore tortuosity is 5 or more, high penetration short circuit resistance is obtained even if the pore volume and/or the average pore diameter change/changes. A high 20-hour rate capacity can be secured. The average pore diameter is preferably 0.01 $\mu m$ or more and 0.25 $\mu m$ or less. From the viewpoint of securing a higher capacity, the average pore diameter is preferably 0.02 $\mu m$ or more and 0.20 $\mu m$ or less.

INDUSTRIAL APPLICABILITY

The separator for lead-acid battery according to the present invention can be applied to valve regulated and flooded-type lead-acid batteries. For example, the separator for lead-acid battery can be suitably utilized as a power source for starting vehicles (an automobile and a motorcycle and the like) and a power source for an industrial power storage apparatus such as an electric vehicle (a forklift and the like). The separator is also suitable for IS lead-acid batteries that are charged and discharged under PSOC conditions.

DESCRIPTION OF REFERENCE SIGNS

1: lead-acid battery
2: negative electrode plate
3: positive electrode plate
4: separator
5: positive electrode shelf part
6: negative electrode shelf part
7: positive pole
8: through-connector
9: negative pole
11: element
12: container
13: partition
14: cell chamber
15: lid
16: negative electrode terminal
17: positive electrode terminal
18: vent plug
100: separator
101: crease
102: base part
104a: main rib
104b: mini rib
106: main part
108a, 108b: end part
109a, 109b: welded part

**Claims**

1. A separator for lead-acid battery comprising a polyolefin, wherein the separator has a pore tortuosity of 10 or more, wherein the pore tortuosity is measured by a mercury intrusion method as described in the description, and wherein the separator contains inorganic particles, wherein a content of the inorganic particles in the separator is 40% by mass or more and 80% by mass or less.

2. The separator for lead-acid battery according to claim 1, wherein the tortuosity is 70 or less.

3. The separator for lead-acid battery according to claim 1 or 2, wherein the separator has a pore volume of 0.70 $cm^3$/g or more and 1.60 $cm^3$/g or less, wherein the pore volume is measured by a mercury intrusion method as described in the description.

4. The separator for lead-acid battery according to any one of claims 1 to 3, wherein the separator has an average pore diameter of 0.01 $\mu$m or more and 0.25 $\mu$m or less, wherein the average pore diameter is measured by a mercury intrusion method as described in the description.

5. The separator for lead-acid battery according to any one of claims 1 to 4, wherein the separator contains 8% by mass or more and 20% by mass or less of an oil.

6. A lead-acid battery comprising a positive electrode plate, a negative electrode plate, and a separator according to any one of claims 1 to 5 interposed between the positive electrode plate and the negative electrode plate.

7. Use of the lead-acid battery according to claim 6 as a power source for idling stop.

8. An idling stop vehicle comprising the lead-acid battery according to claim 6.

**Patentansprüche**

1. Separator für eine Blei-Säure-Batterie, der ein Polyolefin umfasst, wobei der Separator eine Porentortuosität von 10 oder mehr aufweist, wobei die Porentortuosität durch ein Quecksilberintrusionsverfahren gemessen wird, wie in der Beschreibung beschrieben, und wobei der Separator anorganische Partikel enthält, wobei der Gehalt an anorganischen Partikeln in dem Separator 40 Massenprozent oder mehr und 80 Massenprozent oder weniger beträgt.

2. Separator für eine Blei-Säure-Batterie gemäß Anspruch 1, wobei die Tortuosität 70 oder weniger beträgt.

3. Separator für eine Blei-Säure-Batterie gemäß Anspruch 1 oder 2, wobei der Separator ein Porenvolumen von 0,70 $cm^3$/g oder mehr und 1,60 $cm^3$/g oder weniger aufweist, wobei das Porenvolumen durch ein Quecksilberintrusionsverfahren gemessen wird, wie in der Beschreibung beschrieben.

4. Separator für eine Blei-Säure-Batterie gemäß einem der Ansprüche 1 bis 3, wobei der Separator einen durchschnittlichen Porendurchmesser von 0,01 $\mu$m oder mehr und 0,25 $\mu$m oder weniger aufweist, wobei der durchschnittliche Porendurchmesser durch ein Quecksilberintrusionsverfahren gemessen wird, wie in der Beschreibung beschrieben.

5. Separator für eine Blei-Säure-Batterie gemäß einem der Ansprüche 1 bis 4, wobei der Separator 8 Massenprozent oder mehr und 20 Massenprozent oder weniger eines Öls enthält.

6. Blei-Säure-Batterie, umfassend eine positive Elektrodenplatte, eine negative Elektrodenplatte und einen Separator gemäß einem der Ansprüche 1 bis 5, der zwischen der positiven Elektrodenplatte und der negativen Elektrodenplatte angeordnet ist.

7. Verwendung der Blei-Säure-Batterie gemäß Anspruch 6 als Stromquelle für eine Start-Stopp-Automatik.

8. Ein Fahrzeug mit Start-Stopp-Automatik, das die Blei-Säure-Batterie gemäß Anspruch 6 umfasst.

**Revendications**

1.  Séparateur pour batterie au plomb-acide comprenant une polyoléfine, dans lequel le séparateur a une tortuosité des pores de 10 ou plus, dans lequel la tortuosité des pores est mesurée par une méthode d'intrusion de mercure telle que décrite dans la description, et dans lequel le séparateur contient des particules inorganiques, dans lequel la teneur en particules inorganiques dans le séparateur est de 40 % en masse ou plus et de 80 % en masse ou moins.

2.  Séparateur pour batterie au plomb selon la revendication 1, dans lequel la tortuosité est inférieure ou égale à 70.

3.  Séparateur pour batterie au plomb selon la revendication 1 ou 2, dans lequel le séparateur a un volume poreux de 0,70 cm$^3$/g ou plus et de 1,60 cm$^3$/g ou moins, le volume poreux étant mesuré par une méthode d'intrusion de mercure telle que décrite dans la description.

4.  Séparateur pour batterie au plomb selon l'une quelconque des revendications 1 à 3, dans lequel le séparateur a un diamètre moyen des pores de 0,01 $\mu$m ou plus et de 0,25 $\mu$m ou moins, le diamètre moyen des pores étant mesuré par une méthode d'intrusion de mercure telle que décrite dans la description.

5.  Séparateur pour batterie au plomb selon l'une quelconque des revendications 1 à 4, dans lequel le séparateur contient 8 % en masse ou plus et 20 % en masse ou moins d'une huile.

6.  Batterie au plomb-acide comprenant une plaque d'électrode positive, une plaque d'électrode négative et un séparateur selon l'une quelconque des revendications 1 à 5 interposé entre la plaque d'électrode positive et la plaque d'électrode négative.

7.  Utilisation de la batterie au plomb-acide selon la revendication 6 comme source d'alimentation pour l'arrêt au ralenti.

8.  Véhicule à arrêt au ralenti comprenant la batterie au plomb selon la revendication 6.

Fig. 1

Fig. 2

Fig. 3

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2013211115 A
- JP 2017063001 A
- JP 2017033660 A

### Non-patent literature cited in the description

- **TOQUET FABIEN**. *Study of the combined roles of the Silica/Oil/UHMWPE formulation and process parameters on morphological and electrical properties of battery Separators*, 17 February 2017
- Separators and their Effect on Lead-Acid Battery Performance. **JAMES B. DOE et al.** TELECOMMUNICATIONS ENERGY CONFERENCE, 1986, INTELEC '86 INTERNATIONAL. IEEE, 19 October 1986